# EUROPEAN PATENT APPLICATION

(11) **EP 2 403 256 A2**
(43) Date of publication of application: **04.01.2012**
(21) Application number: 11170672.7
(22) Date of filing: 21.06.2011
(51) Int. Cl.: H04N 13/00

(54) **Stereoscopic display device**

(30) Priority: 01.07.2010 JP 2010150912
(71) Applicant: Sony Corporation, Tokyo 108-0075 (JP)
(72) Inventor: Sato, Yoshihisa, Minato-ku, Tokyo 108-0075 (JP)
(74) Representative: Ealey, Douglas Ralph

(57) **Abstract**

A display device includes, a display section time-divisionally displaying a plurality of images with different parallaxes in a manner of progressive (or line-sequential) scan, a backlight section including a plurality of light-emission subsections partitioned in a direction of the progressive scan, a light-barrier section including a plurality of barrier groups each including a plurality of barriers each allowed to be switched between open state and closed state, a light-barrier drive section individually driving the plurality of barrier groups to open or close at different timings between the barrier groups, and a backlight controller controlling light emission from each of the light-emission subsections of the backlight section in synchronization with the progressive scan of the display section.

## Description

The present disclosure relates to a stereoscopic display device, and a display drive circuit.

Recently, attention has been focused on a display device (stereoscopic display device) enabling stereoscopic display. In stereoscopic display, a left-eye image and a right-eye image with parallax to each other (with different parallaxes) are displayed, and a viewer views the respective images by two eyes and thus may recognize a deep stereoscopic image. In addition, a display device has been developed, which displays three or more images with parallax to one another and thus allows a more natural stereoscopic image to be provided to a viewer.

Such a stereoscopic display device is roughly classified into two types, a type with special glasses and a type without special glasses. However, special glasses are generally unpleasant for a viewer, leading to a demand for the type without special glasses. Examples of a display device without special glasses include, for example, a lenticular-lens-type of display device and a parallax-barrier-type of display device. In such types of display devices, a plurality of images with parallax therebetween (eyepoint images) is displayed at a time, so that an image is differently viewed depending on a relative positional relationship (angle) between the display device and eyepoints of a viewer. When such a display device displays a plurality of eyepoint images, image resolution is substantially equal to the quotient of resolution of a display device itself such as CRT (Cathode Ray Tube) or a liquid crystal display device by the number of eyepoints, which has disadvantageously reduced image quality.

Various investigations have been made to overcome such a disadvantage. For example, Japanese Unexamined Patent Application Publication No. 2009-104105 (JP-A-2009-104105) proposes a method of equivalently improving resolution of the parallax-barrier-type of display device by time-divisionally changing between a light-transmission state and a light-blocking state of each barrier to perform time-divisional display.

The parallax-barrier-type of display device typically has a barrier that is often configured of liquid crystal. In the liquid-crystal barrier, liquid crystal molecules are rotated depending on applied voltage, and such a rotated liquid-crystal molecule portion is changed in refractive index, and therefore light modulation is allowed, so that light is controlled to be transmitted or blocked. Liquid crystal molecules typically have slow rotation speed. For example, when a TN (Twisted Nematic) or VA (Vertical Alignment) mode of liquid crystal molecules are rotated to be aligned, response time is approximately several to several tens of milliseconds. A screen of a display device is typically rewritten with a period of 1/60 sec (approximately 16.67 milliseconds) in order to prevent a viewer from feeling image degradation including flicker. The response time of liquid crystal molecules is considerably long with respect to the rewriting period of a screen, causing image degradation due to such transient response of the liquid crystal molecules.

For example, even in the display device disclosed in JP-A-2009-104105, if a liquid-crystal barrier is used, similar image degradation may occur. It is likely that the rewriting period of a screen is extended in order to adjust the response time of liquid crystal molecules to be short compared with the rewriting period of a screen. However, flicker is caused in this case, leading to image degradation.

It is desirable to provide a stereoscopic display device and a display drive circuit, making it possible to minimize image degradation due to response time of liquid crystal molecules.

Various respective aspects and features of the invention are defined in the appended claims. Combinations of features from the dependent claims may be combined with features of the independent claims as appropriate and not merely as explicitly set out in the claims.

Embodiments of the disclosure relate to a stereoscopic display device enabling stereoscopic display, and a display drive circuit used for such a stereoscopic display device. A first stereoscopic display device according to an embodiment of the disclosure includes a display section, a backlight section, a light-barrier section, a light-barrier drive section, and a backlight controller. The display section time-divisionally displays a plurality of images with different parallaxes in a manner of progressive (or line-sequential) scan. The backlight section includes a plurality of light-emission subsections partitioned in a direction of the progressive scan. The light-barrier section includes a plurality of opening-and-closing groups each including a plurality of opening-and-closing sections. The light-barrier drive section individually drives the plurality of opening-and-closing groups to open or close at different timings between the groups. The backlight controller controls light emission from each of the light-emission subsections of the backlight section in synchronization with the progressive scan of the display section.

A second stereoscopic display device according to an embodiment of the disclosure includes a display section, a backlight section, and a light-barrier section. The display section time-divisionally displays a plurality of images with different parallaxes while being driven with progressive scan. The backlight includes a plurality of light-emission subsections partitioned in a direction of the progressive scan, each of the light-emission subsections emitting light in synchronization with the progressive scan of the display section. The light-barrier section includes a plurality of opening-and-closing groups including a plurality of opening-and-closing sections each, where the plurality of opening-and-closing groups individually opens or closes at different timings.

A display drive circuit according to an embodiment of the disclosure includes a backlight controller and a light-barrier drive section. The backlight controller controls light emission from each of light-emission subsections included in a backlight section in synchronization with progressive scan for time-divisionally driving a display section displaying a plurality of images with different parallaxes, the light-emission subsections being formed by partitioning the backlight in a direction of the progressive scan. The light-barrier drive section individually drives a plurality of opening-and-closing groups of a light-barrier section, the plurality of opening-and-closing groups each including a plurality of opening-and-closing sections, to open or close at different timings between the groups.

In the first stereoscopic display device, the second stereoscopic display device, and the display drive circuit according to the embodiments of the disclosure, a plurality of images with different parallaxes displayed time-divisionally on the display section are stereoscopically displayed through a light barrier. In such stereoscopic display, each of the plurality of light-emission subsections of the backlight is controlled in light emission in synchronization with progressive scan of the display section.

In the first stereoscopic display device according to an embodiment of the disclosure, for example, it is desirable that the light-barrier section be partitioned into a plurality of barrier subsections in correspondence to the plurality of light-emission subsections, respectively, and include a plurality of opening-and-closing groups for each of the barrier subsections, the light-barrier drive section individually drive the plurality of opening-and-closing groups to open or close at different timings for each of the barrier subsections, and the backlight controller control light emission of each of the light-emission subsections of the backlight in synchronization with an opening-and-closing state of each opening-and-closing group in each of the plurality of barrier subsections as well as with progressive scan of the display section. In this case, for example, the number of the light-emission subsections of the backlight may be equal to the number of the barrier subsections of the light-barrier section, or the number of the light-emission subsections of the backlight may be larger than the number of the barrier subsections of the light-barrier section. For example, the opening-and-closing sections of each of the plurality of opening-and-closing groups are desirably cyclically disposed every predetermined number of sections in each of the barrier subsections. For example, it is desirable that the light-barrier drive section time-divisionally drive the opening-and-closing sections to open or close for each of the opening-and-closing groups, and the display section sequentially display images at positions corresponding to the opening-and-closing sections in a closing state. For example, one or both of the display section and the light-barrier section may be configured of liquid crystal.

When the light-barrier section is configured of liquid crystal, for example, at a point when light transmittance of the opening-and-closing sections in the light-barrier subsection is maximized or immediately before or after the point, the backlight controller may control each corresponding sub-light-emission region to start light emission, and at a point when the light transmittance starts to decrease from a maximum value or immediately before or after the point, the backlight controller may control each corresponding sub-light-emission region to stop light emission. Here, "immediately before or after" means timing within a span short enough for a viewer not to feel image degradation as viewing an image.

When the display section is configured of liquid crystal, for example, at a point when change of display on the display section finishes or immediately before or after the point, the backlight controller may control each corresponding sub-light-emission region to start light emission, and at a point when change of display on the display section starts or immediately before or after the point, the backlight controller may control each corresponding sub-light-emission region to stop light emission.

For example, the light-barrier section may be disposed between the backlight and the display section. For example, the display section may be disposed between the backlight and the light-barrier section.

According to the first stereoscopic display device, the second stereoscopic display device, and the display drive circuit of the embodiments of the disclosure, the backlight is partitioned in a scan direction of progressive scan, and such partitioned backlight sections are allowed to emit light independently of one another, and therefore image degradation due to response time of liquid crystal molecules may be minimized.

It is to be understood that both the foregoing general description and the following detailed description are exemplary, and are intended to provide further explanation of the technology as claimed.

Embodiments of the invention will now be described with reference to the accompanying drawings, throughout which like parts are referred to by like references, and in which: The accompanying drawings are included to provide a further understanding of the disclosure, and are incorporated in and constitute a part of this specification. The drawings illustrate embodiments and, together with the specification, serve to explain the principles of the technology.
FIG. 1 is a block diagram showing a configuration example of a stereoscopic display device according to an embodiment of the disclosure.
FIGs. 2A and 2B are explanatory diagrams showing a configuration example of the stereoscopic display device according to the embodiment.
FIG. 3 is a block diagram showing a configuration example of a display drive section and a display section according to the embodiment.
FIG. 4 is an explanatory diagram showing a configuration example of the display section according to the embodiment.
FIG. 5 is a circuit diagram showing a configuration example of a pixel according to the embodiment.
FIGs. 6A and 6B are explanatory diagrams showing a configuration example of a backlight according to the embodiment.
FIGs. 7A and 7B are explanatory diagrams showing a configuration example of a liquid crystal barrier according to the embodiment.
FIG. 8 is a schematic diagram showing an operation example in stereoscopic display of the liquid crystal barrier according to the embodiment.
FIG. 9 is a schematic diagram showing an operation example of each of the display section and the liquid crystal barrier according to the embodiment.
FIG. 10 is a schematic diagram showing another operation example of each of the display section and the liquid crystal barrier according to the embodiment.
FIG. 11 is a timing chart showing an operation example of the display section according to the embodiment.
FIG. 12 is an explanatory diagram showing an operation example of the stereoscopic display device according to the embodiment.
FIG. 13 is a timing chart showing an operation example of the stereoscopic display device according to the embodiment.
FIG. 14 is a block diagram showing a configuration example of a stereoscopic display device according to a comparative example.
FIG. 15 is a timing chart showing an operation example of the stereoscopic display device according to the comparative example.
FIG. 16 is a timing chart showing an operation example of a stereoscopic display device according to a modification of the embodiment of the disclosure.
FIGs. 17A and 17B are explanatory diagrams showing a configuration example of a stereoscopic display device according to another modification of the embodiment of the disclosure.
FIG. 18 is a schematic diagram showing an operation example of the stereoscopic display device according to the above modification of the embodiment of the disclosure.
FIG. 19 is a plan diagram showing a configuration example of a backlight according to still another modification of the embodiment of the disclosure.
FIGs. 20A and 20B are plan diagrams showing a configuration example of a liquid crystal barrier according to still another modification of the embodiment of the disclosure.
FIG. 21 is a schematic diagram showing an operation example of each of a display section and a liquid crystal barrier according to still another modification of the embodiment of the disclosure.
FIG. 22 is an explanatory diagram showing an operation example of a stereoscopic display device according to still another modification of the embodiment of the disclosure.
FIG. 23 is an explanatory diagram showing an operation example of a stereoscopic display device according to still another modification of the embodiment of the disclosure.
FIG. 24 is a timing chart showing an operation example of a stereoscopic display device according to still another modification of the embodiment of the disclosure.
FIG. 25 is a timing chart showing another operation example of the stereoscopic display device according to the above modification of the embodiment of the disclosure.
FIGs. 26A and 26B are plan diagrams showing a configuration example of a stereoscopic display device according to still another modification of the embodiment of the disclosure. Hereinafter, an embodiment of the disclosure will be described in detail with reference to drawings.

### [Configuration Example]

### (General Configuration Example)

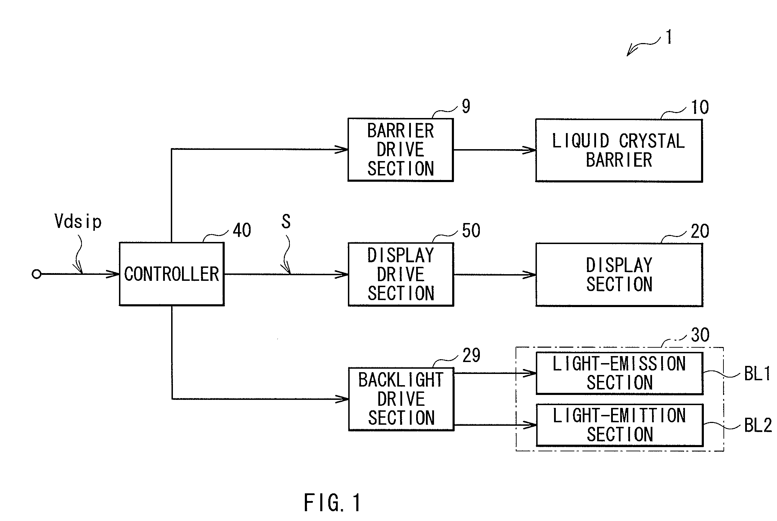

FIG. 1 illustrates a configuration example of a stereoscopic display device according to an embodiment of the disclosure. Since a display drive circuit according to an embodiment of the disclosure is embodied by the embodiment, the circuit is described together. A stereoscopic display device 1 includes a controller 40, a display drive section 50, a display section 20, a backlight drive section 29, a backlight 30, a barrier drive section 9, and a liquid crystal barrier 10.

The controller 40 supplies a control signal to each of the display drive section 50, the backlight drive section 29, and the barrier drive section 9 based on an image signal Vdisp supplied from the outside, and controls the sections to operate in synchronization with one another. Specifically, the controller 40 supplies an image signal S to the display drive section 50 based on the image signal Vdisp, supplies a backlight control instruction to the backlight drive section 29, and supplies a barrier control instruction to the barrier drive section 9. When the stereoscopic display device 1 performs stereoscopic display, the image signal S includes image signals SA and SB including a plurality of (six in this example) eyepoint images each, as described later.

The display drive section 50 drives the display section 20 according to the image signal S supplied from the controller 40. The display section 20 drives liquid crystal elements to modulate light outputted from the backlight 30 to perform display.

The backlight drive section 29 drives the backlight 30 according to the backlight control signal supplied from the controller 40. The backlight 30 has a function of outputting surface-emitted light to the display section 20.

The barrier drive section 9 drives the liquid crystal barrier 10 according to the barrier control instruction supplied from the controller 40. The liquid crystal barrier 10 has a plurality of opening-and-closing sections 11 and 12 (described later) configured of liquid crystal, and has a function of transmitting or blocking light outputted from the backlight 30 and transmitted through the display section 20.

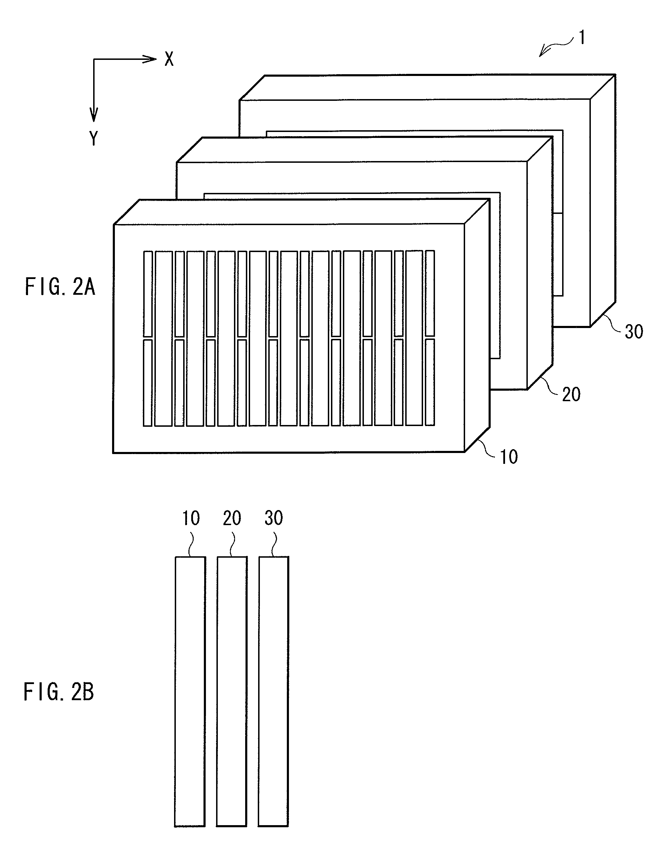

FIGs. 2A and 2B illustrate a configuration example of a relevant part of the stereoscopic display device 1, where FIG. 2A illustrates an exploded perspective configuration of the stereoscopic display device 1, and FIG. 2B illustrates a side view thereof. As shown in FIGs. 2A and 2B, the stereoscopic display device 1 has components including the backlight 30, the display section 20, and the liquid crystal barrier 10 disposed in this order. In other words, light outputted from the backlight 30 is received by a viewer after passing through the display section 20 and the liquid crystal barrier 10.

### (Display Drive Section 50 and Display Section 20)

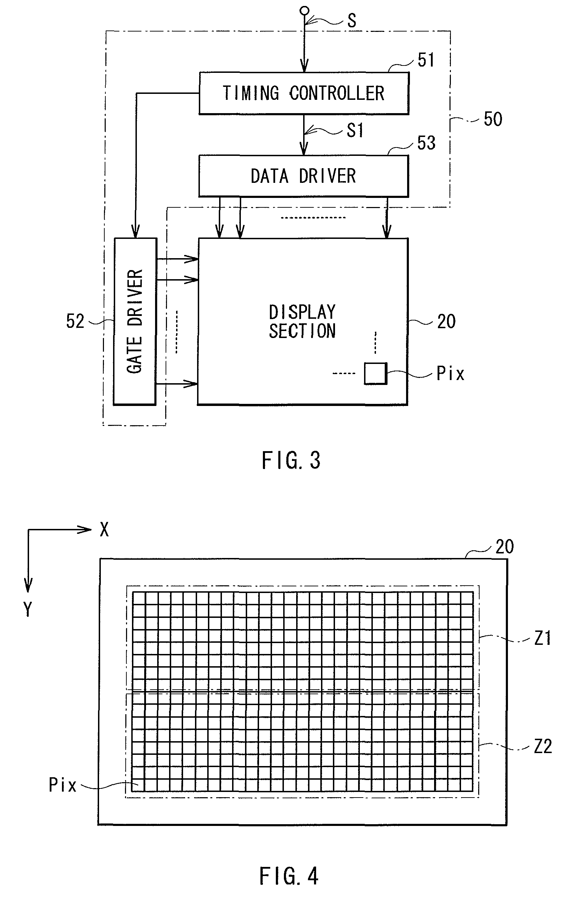

FIG. 3 illustrates an example of a block diagram of the display drive section 50 and the display section 20. The display drive section 50 has a timing controller 51, a gate driver 52, and a data driver 53. The timing controller 51 controls drive timing of each of the gate driver 52 and the data driver 53, and supplies an image signal S1, corresponding to the image signal S supplied from the controller 40, to the data driver 53. The gate driver 52 sequentially selects pixels Pix (described later) in a liquid crystal display device 45 for each row according to timing control by the timing controller 51 to perform progressive scan of the pixels. The data driver 53 supplies a pixel signal based on the image signal S1 to each pixel Pix of the display section 20. Specifically, the data driver 53 performs D/A (Digital to Analog) conversion based on the image signal S1, and thus generates the pixel signal as an analog signal and supplies the pixel signal to each pixel Pix.

The display section 20 includes a liquid crystal material enclosed between two transparent substrates configured of glass or the like. Transparent electrodes configured of, for example, ITO (Indium Tin Oxide) are formed on a surface area to be contacted to the liquid crystal material of each of the transparent substrates, and configure the pixels Pix, together with the liquid crystal material.

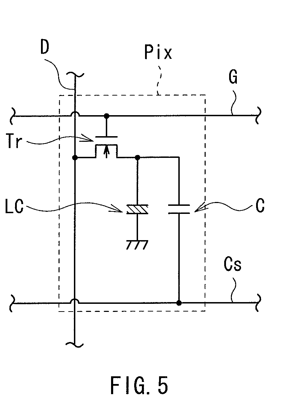

FIG. 4 illustrates a configuration example of the display section 20. FIG. 5 illustrates an example of a circuit diagram of a pixel Pix. The display section 20 has the pixels Pix arranged in a matrix as shown in FIG. 4.

Each pixel Pix has a TFT (Thin Film Transistor) element Tr, a liquid crystal element LC, and a capacitance element C as shown in FIG. 5. The TFT element Tr is configured of, for example, MOS-FET (Metal Oxide Semiconductor-Field Effect Transistor), where a gate is connected to a gate line G, a source is connected to a data line D, and a drain is connected to one end of the liquid crystal element LC and one end of the capacitance element C. One end of the liquid crystal element LC is connected to the drain of the TFT element Tr, and the other end is grounded. One end of the capacitance element C is connected to the drain of the TFT element Tr, and the other end is connected to a capacitance element line Cs. The gate line G is connected to the gate driver 52, and the data line D is connected to the data driver 53.

Zones Z1 and Z2 shown in FIG. 4 correspond to positions of light-emission sections BL1 and BL2 (described later) of the backlight 30, respectively, as described in detail later. In other words, the display section 20 is disposed to allow light outputted from the light-emission section BL1 to enter the zone Z1, and light outputted from the light-emission section BL2 to enter the zone Z2.

According to such a configuration, light outputted from the backlight 30 becomes linearly polarized light in a direction determined by a polarizing plate (not shown) disposed on an incidence side of the display section 20, and then enters the liquid crystal element LC. In the liquid crystal element LC, a direction of liquid crystal molecules is changed in a certain response time according to a pixel signal supplied via the data line D. Light entering such a liquid crystal element LC is changed in a polarization direction. Then, light transmitted through the liquid crystal element LC enters a polarizing plate (not shown) disposed on an output side of the display section 20, and only light in a particular polarization direction is transmitted through the polarizing plate. In this way, light intensity is modulated in the liquid crystal element LC.

### (Backlight 30)

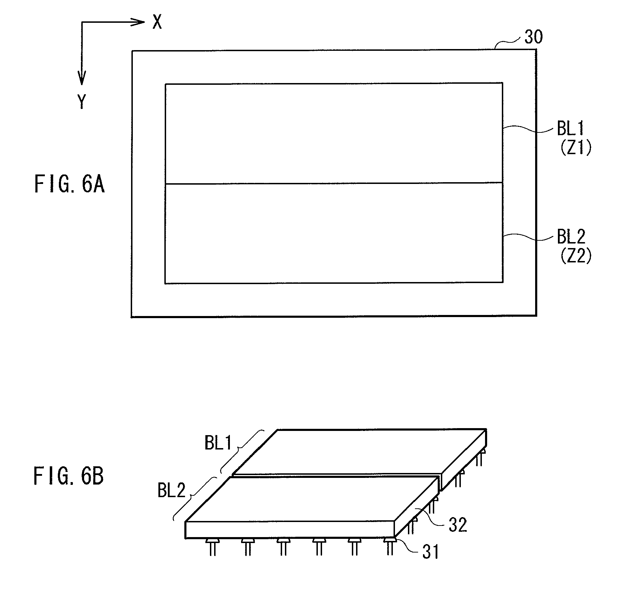

FIGs. 6A and 6B illustrate a configuration example of the backlight 30, where FIG. 6A illustrates a plan diagram of the backlight 30, and FIG. 6B illustrates a perspective diagram of a relevant part of the backlight 30. The backlight 30 has the two light-emission sections BL1 and BL2 that may emit light independently of each other, as shown in FIG. 6A. Each of the light-emission sections BL1 and BL2 has a light source 31 and a light guide plate 32 as shown in FIG. 6B. The light source 31 is configured of LEDs (Light Emitting Diodes) in this example. The light guide plate 32 diffuses light outputted from the light source 31 to achieve substantially uniform surface-emission of the light-emission sections BL1 and BL2.

In the backlight 30, light is not transmitted between the light-emission sections BL1 and BL2 in order to allow the sections BL1 and BL2 to emit light independently of each other. Specifically, first, light outputted from one light source 31 enters only a light guide plate 32 corresponding to the light source 31. Light entering the light guide plate 32 is totally reflected by a side face of the plate 32, which prevents light from being transmitted to an adjacent light guide plate 32 through the side face. Specifically, such total reflection may be achieved by adjusting a position of the light source 31, or providing a reflecting surface for light reflection on the side face of the light guide plate 32. While the light source 31 is configured of LEDs in the example, this is not limitative. For example, the light source 31 may be configured of CCFL (Cold Cathode Fluorescent Lamp) in place of LEDs.

The light-emission sections BL1 and BL2 correspond to the zones Z1 and Z2 shown in FIG. 4, respectively. In other words, light outputted from the light-emission section BL1 enters the zone Z1 of the display section 20, and light outputted from the light-emission section BL2 enters the zone Z2 thereof. In other words, pixels Pix disposed in the zone Z1 of the display section 20 perform display based on light outputted from the light-emission section BL1. Similarly, pixels Pix disposed in the zone Z2 perform display based on light outputted from the light-emission section BL2.

According to such a configuration, the backlight drive section 29 drives the light-emission sections BL1 and BL2 of the backlight 30 at different timings, thereby the stereoscopic display device 1 performs display in each of the zones Z1 and Z2 at different timings.

### (Liquid Crystal Barrier 10)

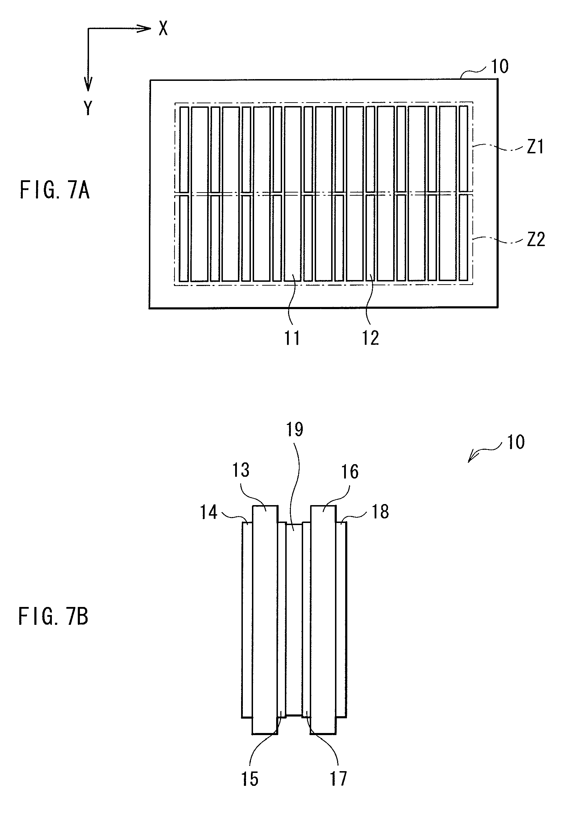

FIGs. 7A and 7B illustrate a configuration example of the liquid crystal barrier 10, where FIG. 7A illustrates a plan diagram of the liquid crystal barrier 10, and FIG. 7B illustrates a side view thereof. In the example, the liquid crystal barrier 10 performs normally black operation. In other words, the liquid crystal barrier 10 blocks light in a non-driven state.

The liquid crystal barrier 10 has a plurality of opening-and-closing sections 11 or 12 for transmitting or blocking light as shown in FIG. 7A. The opening-and-closing sections 11 or 12 differently operate depending on whether the stereoscopic display device 1 performs normal display (two-dimensional display) or stereoscopic display. Specifically, when the stereoscopic display device 1 performs normal display, the opening-and-closing sections 11 open (transmissive state), and when the stereoscopic display device 1 performs stereoscopic display, the sections 11 close (blocking state), as described later. When the stereoscopic display device 1 performs normal display, the opening-and-closing sections 12 open (transmissive state), and when the stereoscopic display device 1 performs stereoscopic display, the sections 12 open and close time-divisionally, as described later.

The liquid crystal barrier 10 includes a transparent substrate 13, a transparent substrate 16 disposed to face the transparent substrate 13, and a liquid crystal layer 19 inserted between the transparent substrates 13 and 16. The transparent substrates 13 and 16 are configured of, for example, glass. A plurality of transparent electrodes 15 and 17 configured of, for example, ITO are formed on a surface on a liquid crystal layer 19 side of the transparent substrate 13 and on a surface on a liquid crystal layer 19 side of the transparent substrate 16, respectively. The transparent electrodes 15 formed on the transparent substrate 13 and the transparent electrodes 17 formed on the transparent substrate 16 are disposed at positions opposed to each other, and configure the opening-and-closing sections 11 and 12, together with the liquid crystal layer 19. Polarizing plates 14 and 18 are formed on a surface on a side opposite to the liquid crystal layer 19 side of the transparent substrate 13 and on a surface on a side opposite to the liquid crystal layer 19 side of the transparent substrate 16, respectively. In FIG. 7B, the display section 20 and the backlight 30, which are not shown, are disposed in the right of the liquid crystal barrier 10 (in the right of the polarizing plate 18) in the same order as shown in FIG. 2B.

Opening-and-closing operation of the opening-and-closing sections 11 or 12 of the liquid crystal barrier 10 is performed in the same way as display operation of the display section 20. In other words, light outputted from the backlight 30 and transmitted through the display section 20 becomes linearly polarized light in a direction determined by the polarizing plate 18 and then enters the liquid crystal layer 19. In the liquid crystal layer 19, a direction of liquid crystal molecules is changed in a certain response time depending on difference in electric potential supplied between the transparent electrodes 15 and 17. Light entering such a liquid crystal layer 19 is changed in a polarization direction. Then, light transmitted through the liquid crystal layer 19 enters the polarizing plate 14 and only light in a particular polarization direction is transmitted through the polarizing plate. In this way, light intensity is modulated in the liquid crystal layer 19.

According to such a configuration, when voltage is applied to the transparent electrodes 15 and 17 and thus difference in electric potential between the electrodes is increased, light transmittance of the liquid crystal layer 19 increases, and consequently the opening-and-closing sections 11 and 12 are into a transmissive state. In contrast, when difference in electric potential between the transparent electrodes 15 and 17 is reduced, light transmittance of the liquid crystal layer 19 decreases, and consequently the opening-and-closing sections 11 and 12 are into a blocking state.

While the liquid crystal barrier 10 performs normally black operation in the example, this is not limitative. For example, the liquid crystal barrier 10 may perform normally white operation instead. In such a case, when difference in electric potential between the transparent electrodes 15 and 17 is increased, the opening-and-closing sections 11 and 12 are into a blocking state, and when difference in electric potential between the electrodes is reduced, the opening-and-closing sections 11 and 12 are into a transmissive state. The normally black operation and the normally white operation may be selectively set, for example, by adjusting a type of each polarizing plate and alignment of liquid crystal.

The zones Z1 and Z2 shown in FIG. 7A correspond to positions of the light-emission sections BL1 and BL2 of the backlight 30, respectively, as in the case of the display section 20 shown in FIG. 4. In other words, the liquid crystal barrier 10 is disposed to allow light outputted from the light-emission section BL1 to enter the zone Z1 of the liquid crystal barrier 10 through the display section 20, and light outputted from the light-emission section BL2 to enter the zone Z2 through the display section 20.

In the liquid crystal barrier 10, the opening-and-closing sections 12 disposed in the zone Z1 and the opening-and-closing sections 12 disposed in the zone Z2 may operate independently of each other. The barrier drive section 9 drives the two kinds of opening-and-closing sections 12 to operate independently of each other, so that when stereoscopic display is performed, timing of opening-and-closing operation of the opening-and-closing sections 12 in the zone Z1 may be different from timing of opening-and-closing operation of the opening-and-closing sections 12 in the zone Z2.

The opening-and-closing sections 12 form a group in each of the zones Z1 and Z2. When stereoscopic display is performed, the opening-and-closing sections 12 in the same group open or close at the same timing. The groups of the opening-and-closing sections 12 are described below.

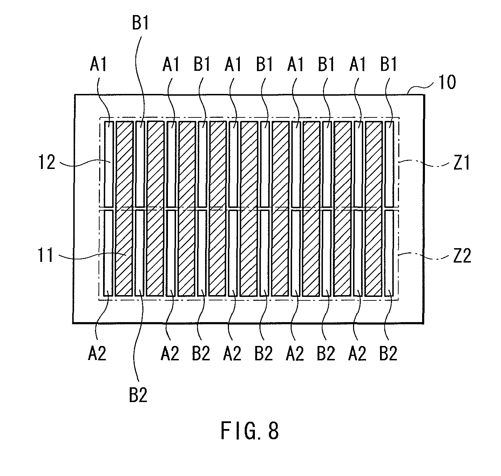

FIG. 8 illustrates a configuration example of the groups of the opening-and-closing sections 12. In this example, the opening-and-closing sections 12 form two groups in each of the zones Z1 and Z2.

Specifically, a plurality of opening-and-closing sections 12 disposed alternately form a group A1 and a group B1 in the zone Z1. Similarly, a plurality of opening-and-closing sections 12 disposed alternately form a group A2 and a group B2 in the zone Z2.

When stereoscopic display is performed, the barrier drive section 9 drives a plurality of opening-and-closing sections 12 in the same group to open or close at the same timing. Specifically, for the zone Z1, the barrier drive section 9 time-divisionally drives a plurality of opening-and-closing sections 12 in the group A1 and a plurality of opening-and-closing sections 12 in the group B1 to open or close alternately, as described later. To achieve such simultaneous operation of a plurality of opening-and-closing sections 12 in the same group, for example, the barrier drive section 9 may apply a drive signal at a time to transparent electrodes 15 and 17 of the plurality of opening-and-closing sections 12 in the same group. Alternatively, the transparent electrodes 15 or 17 of the plurality of opening-and-closing sections 12 in the same group may be connected to one another so that a drive signal is applied to the transparent electrodes at a time.

Hereinafter, group A is appropriately used as a general term of the groups A1 and A2, and similarly, group B is appropriately used as a general term of the groups B1 and B2. In addition, a term, opening-and-closing sections 12A, is appropriately used as a general term of opening-and-closing sections 12 in the group A (groups A1 and A2), and similarly, a term, opening-and-closing sections 12B, is appropriately used as a general term of opening-and-closing sections 12 in the group B (groups B1 and B2).

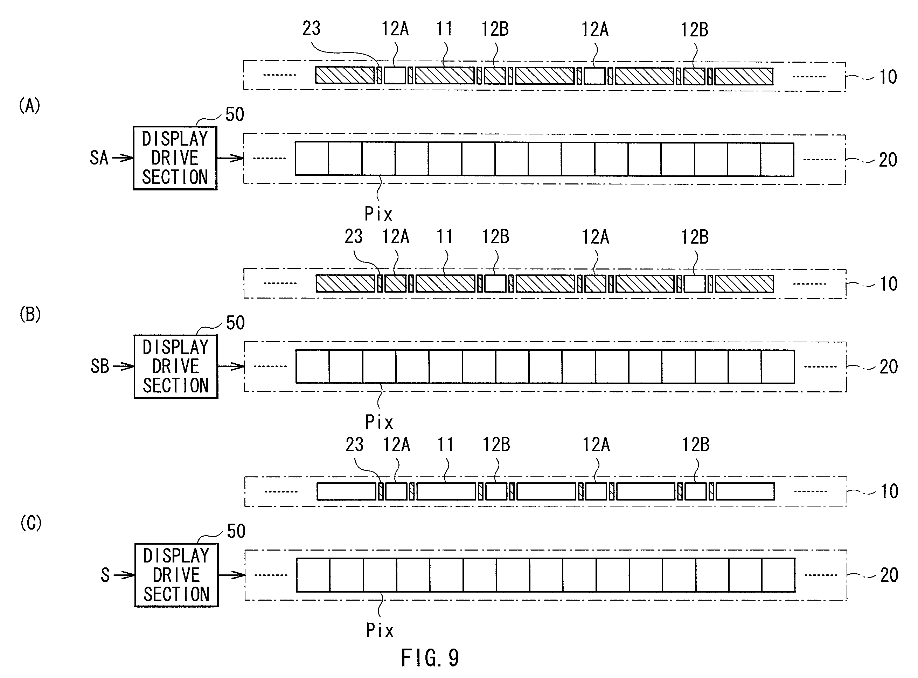

FIG 9 illustrates a sectional structure of the liquid crystal barrier 10 to schematically show a state of the barrier when stereoscopic display or normal display (two-dimensional display) is performed, where (A) illustrates a state of the barrier for stereoscopic display, (B) illustrates another state of the barrier for stereoscopic display, and (C) illustrates a state of the barrier for normal display. The liquid crystal barrier 10 includes the opening-and-closing sections 11 and the opening-and-closing sections 12 (opening-and-closing sections 12A and 12B) arranged alternately. In this example, the opening-and-closing sections 12A are provided by one for six pixels Pix of the display section 20. Similarly, the opening-and-closing sections 12B are provided by one for six pixels Pix of the display section 20. While each pixel Pix is assumed to be configured of three sub-pixels (RGB) in the following description, this is not limitative. For example, the pixel Pix may be configured of one sub-pixel. Light-blocking portions in the liquid crystal barrier 10 are shaded.

When stereoscopic display is performed, the image signals SA and SB are alternately supplied to the display drive section 50, and in the liquid crystal barrier 10, the opening-and-closing sections 12 (opening-and-closing sections 12A and 12B) open and close time-divisionally, while the opening-and-closing sections 11 continuously close (blocking state). Specifically, when an image signal SA is supplied, the opening-and-closing sections 12A open, and the opening-and-closing sections 12B close as shown in (A) of FIG. 9. In the display section 20, six adjacent pixels Pix disposed at positions corresponding to each of the opening-and-closing sections 12A display images corresponding to six eyepoint images in the image signal SA, respectively. Consequently, for example, a viewer views different eyepoint images by two eyes, and thus feels a stereoscopic image being displayed as described later. Similarly, when the image signal SB is supplied, the opening-and-closing sections 12B open, while the opening-and-closing sections 12A close as shown in (B) of FIG 9. In the display section 20, six adjacent pixels Pix disposed at positions corresponding to each of the opening-and-closing sections 12B display images corresponding to six eyepoint images in the image signal SB, respectively. Consequently, for example, a viewer views different eyepoint images by two eyes, and thus feels a stereoscopic image being displayed as described later. The stereoscopic display device 1 displays images while the opening-and-closing sections 12A and 12B are allowed to open alternately, thereby resolution of the display device may be improved, as described later.

When normal display (two-dimensional display) is performed, in the liquid crystal barrier 10, both the opening-and-closing sections 11 and the opening-and-closing sections 12 (opening-and-closing sections 12A and 12B) continuously open (transmissive state) as shown in (C) of FIG 9. This allows a viewer to directly view a normal two-dimensional image displayed on the display section 20 based on the image signal S.

Boundaries 23 for opening-and-closing sections are provided between the opening-and-closing sections 11 and the opening-and-closing sections 12 as shown in FIG. 9. In the boundaries 23, the transparent electrodes 15 and 17 are not formed on the transparent substrates 13 and 16, respectively. In other words, the boundaries 23 may not open or close unlike the opening-and-closing sections 11 and 12, and close (blocking state) at any time in a liquid crystal barrier 10 for normally black operation. In contrast, the boundaries 23 open (transmissive state) at any time in a liquid crystal barrier 10 for normally white operation. The boundaries 23 are sufficiently small compared with the opening-and-closing sections 11 or 12, and therefore substantially not troublesome for a viewer. The boundaries 23 are appropriately omitted in figures and description hereinafter.

The zone Z1 or Z2 of the backlight 30 corresponds to a specific example of "sub-light-emission region" according to an embodiment of the disclosure. The group A1, B1, A2, or B2 corresponds to a specific example of "opening-and-closing section group" according to an embodiment of the disclosure. The liquid crystal barrier 10 corresponds to a specific example of "light-barrier section" according to an embodiment of the disclosure. The barrier drive section 9 corresponds to a specific example of "light-barrier drive section" according to an embodiment of the disclosure. The backlight drive section 29 corresponds to a specific example of "backlight controller" according to an embodiment of the disclosure. The zone Z1 or Z2 of the liquid crystal barrier 10 corresponds to a specific example of "barrier subsection" according to an embodiment of the disclosure.

### [Operation and Effects]

Next, operation and effects of the stereoscopic display device 1 of the embodiment are described.

### (Outline of General Operation)

The controller 40 supplies a control signal to each of the display drive section 50, the backlight drive section 29, and the barrier drive section 9 based on an image signal Vdisp supplied from the outside, and controls the sections to operate in synchronization with one another. The backlight drive section 29 drives the backlight 30 according to the backlight control signal supplied from the controller 40. The backlight 30 outputs surface-emitted light to the display section 20. The display drive section 50 drives the display section 20 according to the image signal S supplied from the controller 40. The display section 20 modulates light outputted from the backlight 30 to perform display. The barrier drive section 9 drives the liquid crystal barrier 10 according to a barrier control instruction supplied from the controller 40. The liquid crystal barrier 10 transmits or blocks light outputted from the backlight 30 and transmitted through the display section 20.

### (Detailed Operation of Stereoscopic Display)

Next, operation in stereoscopic display is described in detail with reference to several drawings.

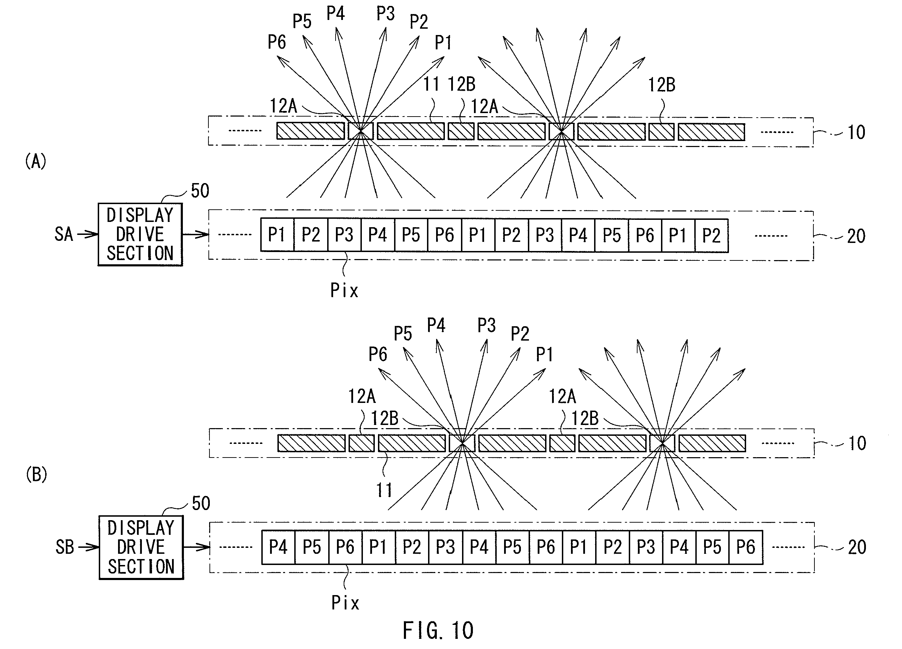

FIG. 10 illustrates an operation example of each of the display section 20 and the liquid crystal barrier 10, where (A) illustrates a case where the image signal SA is supplied, and (B) illustrates a case where the image signal SB is supplied.

When the image signal SA is supplied, pixels Pix of the display section 20 display pixel information P1 to P6 corresponding to six eyepoint images in the image signal SA, respectively, as shown in (A) of FIG. 10. The pixel information P1 to P6 are displayed on pixels Pix disposed near an opening-and-closing section 12A, respectively. When the image signal SA is supplied, the liquid crystal barrier 10 is controlled such that the opening-and-closing sections 12A open (transmissive state), and the opening-and-closing sections 12B close. Light from each of the pixels Pix of the display section 20 is outputted with an angle limited by the opening-and-closing section 12A. For example, a viewer may view a stereoscopic image through viewing pixel information P3 by a left eye and viewing pixel information P4 by a right eye.

When the image signal SB is supplied, pixels Pix of the display section 20 display pixel information P1 to P6 corresponding to six eyepoint images in the image signal SB, respectively, as shown in (B) of FIG. 10. The pixel information P1 to P6 are displayed on pixels Pix disposed near an opening-and-closing section 12B, respectively. When the image signal SB is supplied, the liquid crystal barrier 10 is controlled such that the opening-and-closing sections 12B open (transmissive state), and the opening-and-closing sections 12A close. Light from each of the pixels Pix of the display section 20 is outputted with an angle limited by the opening-and-closing section 12B. For example, a viewer may view a stereoscopic image through viewing pixel information P3 by a left eye and viewing pixel information P4 by a right eye.

In this way, a viewer views different kinds of pixel information between pixel information P1 to pixel information P6 between two eyes, allowing the viewer to feel a stereoscopic image being displayed. In addition, images are displayed while the opening-and-closing sections 12A and 12B are allowed to open alternately in a time-dimensional manner, so that a viewer views images displayed at positions displaced from each other with the images being averaged. Accordingly, the stereoscopic display device 1 enables resolution twice as high as resolution in a case where only the opening-and-closing sections 12A are provided. In other words, resolution of the stereoscopic display device 1 is 1/3 (=1/6*2) of resolution in the case of two-dimensional display.

Next, detailed description is made on operation of each of the liquid crystal barrier 10, the display section 20, and the backlight 30 in each of the zones Z1 and Z2.

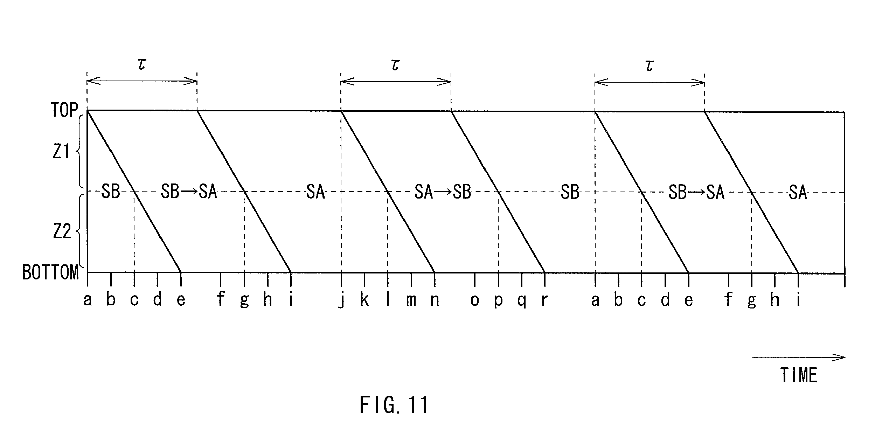

FIG. 11 illustrates display operation of the display section 20. A vertical axis shows a position of the display section 20 in a progressive scan direction (y-axis direction) (FIG. 4), and a horizontal axis shows time. In other words, FIG. 11 illustrates a display operation state at a certain position in the y-axis direction at a certain time. In FIG 11, "SA" shows a state of display based on the image signal SA, and "SB" shows a state of display based on the image signal SB. In addition, "SA→SB" shows a state where the image signal SB is supplied to the display drive section 50, so that display based on the image signal SA is being changed to display based on the image signal SB. Similarly, "SB→SA" shows a state where the image signal SA is supplied to the display drive section 50, so that display based on the image signal SB is being changed to display based on the image signal SA. The "SA→SB" or "SB→SA" corresponds to response time τ of liquid crystal molecules.

The display section 20 is progressively scanned from a top to a bottom thereof in a period from time a to time i, so that display based on the image signal SB is changed to display based on the image signal SA.

First, at time a, the display section 20 performs display based on the image signal SB at all positions in the y-axis direction as shown in FIG. 11. In other words, the display section 20 performs display based on the image signal SB over the whole display surface of the section 20.

Then, in the display section 20, pixel signals based on the image signal SA are sequentially applied to the pixels Pix from the top of the section, so that display based on the image signal SB is gradually changed to display based on the image signal SA. For example, at time c, the zone Z1 (upper part of the display section 20) is in a state where display based on the image signal SB is being changed to display based on the image signal SA, while the zone Z2 (lower part of the display section 20) still performs display based on the image signal SB. In other words, while a pixel signal in accordance with the image signal SA is applied to each pixel Pix in the zone Z1, response speed of liquid crystal is low and therefore display may not be immediately changed, leading to such a transient state.

At time e, the whole display surface of the display section 20 is in a state where display based on the image signal SB is being changed to display based on the image signal SA.

Then, in the display section 20, response of liquid crystal is sequentially finished from the top, and display based on the image signal SA is performed. For example, at time g, the zone Z1 (upper part of the display section 20) is in a state where display based on the image signal SB has been changed to display based on the image signal SA, while the zone Z2 (lower part of the display section 20) is still in a state where display based on the image signal SB is being changed to display based on the image signal SA.

At time i, display based on the image signal SB is changed to display based on the image signal SA over the whole display surface of the display section 20. In other words, the display section 20 performs display based on the image signal SA.

Next, the display section 20 is similarly progressively scanned from the top to the bottom thereof in a period from time j to time r, so that display based on the image signal SA is changed to display based on the image signal SB.

The display section 20 repeats the above-described operation from time a to time r, so that display based on the image signal SA and display based on the image signal SB are alternately repeated.

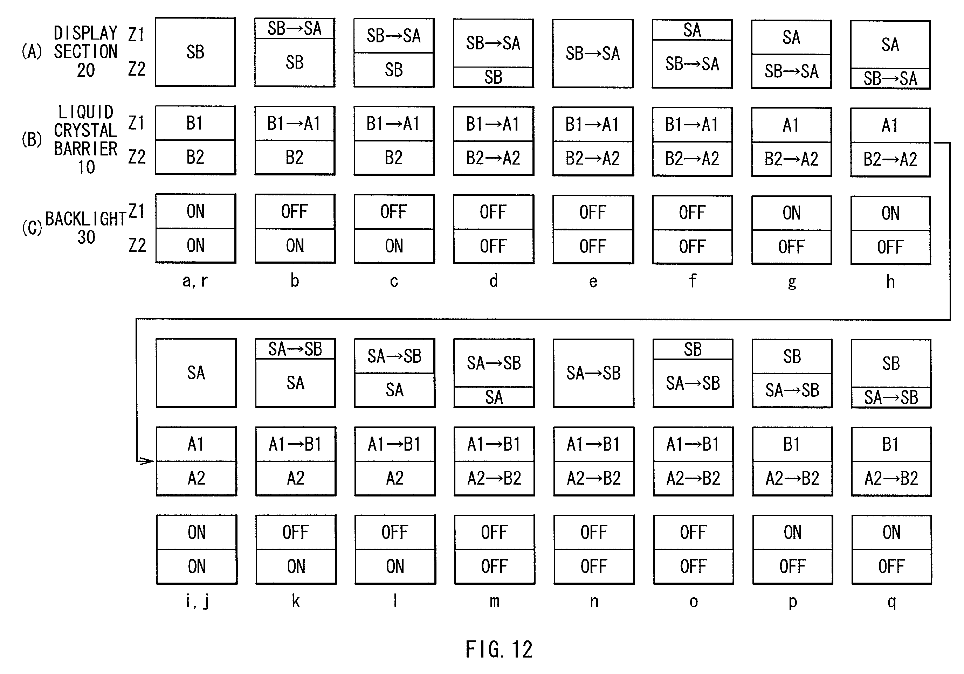

FIG. 12 illustrates display operation of the stereoscopic display device 1, where (A) illustrates a state of the display section 20, (B) illustrates a state of the liquid crystal barrier 10, and (C) illustrates a state of the backlight 30. In (A) of FIG. 12, "SA", "SB", "SA→SB", and "SB→SA" show the same states as those shown in FIG. 11, respectively. In (B) of FIG. 12, "A1" shows a state where opening-and-closing sections 12 in the group A1 of the liquid crystal barrier 10 open, and opening-and-closing sections 12 in the group B1 close. In addition, "B1" shows a state where the opening-and-closing sections 12 in the group B1 of the liquid crystal barrier 10 open, and the opening-and-closing sections 12 in the group A1 close. In addition, "A1→B1" shows a state where a state of the opening-and-closing sections 12 in the group B1 is being changed from closing to opening, and a state of the opening-and-closing sections 12 in the group A1 is being changed from opening to closing. In addition, "B1→A1" shows a state where a state of the opening-and-closing sections 12 in the group A1 is being changed from closing to opening, and a state of the opening-and-closing sections 12 in the group B1 is being changed from opening to closing. In (B) of FIG. 12, "A2", "B2", "A2→B2", and "B2→A2" show similar states to the above, respectively. In other words, "A2" shows a state where opening-and-closing sections 12 in the group A2 of the liquid crystal barrier 10 open, and opening-and-closing sections 12 in the group B2 close. In addition, "B2" shows a state where the opening-and-closing sections 12 in the group B2 of the liquid crystal barrier 10 open, and the opening-and-closing sections 12 in the group A2 close. In addition, "A2→B2" shows a state where a state of the opening-and-closing sections 12 in the group B2 is being changed from closing to opening, and a state of the opening-and-closing sections 12 in the group A2 is being changed from opening to closing. In addition, "B2→A2" shows a state where a state of the opening-and-closing sections 12 in the group A2 is being changed from closing to opening, and a state of the opening-and-closing sections 12 in the group B2 is being changed from opening to closing. In (C) of FIG. 12, "ON" shows a state where the light-emission section BL1 or BL2 of the backlight 30 emits light, and "OFF" shows a state where the light-emission section does not emit light. In other words, for example, "ON" in the zone Z1 shows a state where the light-emission section BL1 emits light, and "ON" in the zone Z2 shows a state where the light-emission section BL2 emits light. Time a to time r correspond to time a to time r in FIG. 11.

First, the display section 20 is progressively scanned from the top to the bottom thereof according to the drive signal supplied from the display drive section 50 in a period from time a to time i, so that display based on the image signal SB is changed to display based on the image signal SA. In the liquid crystal barrier 10, a state of opening-and-closing sections 12 in the group A (groups A1 and A2) is changed from closing to opening, and a state of opening-and-closing sections 12 in the group B (groups B1 and B2) is changed from opening to closing in correspondence to change in display state of the display section 20 according to a drive signal supplied from the barrier drive section 9. In the backlight 30, the light-emission section BL1 or BL2 emits light in correspondence to a state of each of the display section 20 and the liquid crystal barrier 10 in the zone Z1 or Z2 according to a drive signal supplied from the backlight drive section 29.

At time a, the display section 20 performs display based on the image signal SB over the whole display surface. In the liquid crystal barrier 10, opening-and-closing sections 12 in the groups B1 and B2 corresponding to the image signal SB open, and opening-and-closing sections 12 in the groups A1 and A2 close. In the backlight 30, both the light-emission sections BL1 and BL2 in the zones Z1 and Z2 emit light. Consequently, the stereoscopic display device 1 performs display based on the image signal SB.

At time b, an upper quarter portion of the display section 20 (half the zone Z1) is in a state where display based on the image signal SB is being changed to display based on the image signal SA. In the liquid crystal barrier 10, the zone Z1 corresponding to the zone Z1 of the display section 20, where the above change has started, is in a state where a state of opening-and-closing sections 12 in the group A1 according to the image signal SA is being changed from closing to opening, and a state of opening-and-closing sections 12 in the group B1 according to the image signal SB is being changed from opening to closing. In other words, the opening-and-closing sections 12 in the group A1 or B1 in the zone Z1 are in such a transient state since response speed of liquid crystal is low and therefore a state of the sections may not be immediately changed in the same way as in the display section 20. In the backlight 30, the light-emission section BL1 corresponding to the zone Z1, where the above change has started in each of the display section 20 and the liquid crystal barrier 10, stops light emission. This prevents a viewer from viewing each of the display section 20 and the liquid crystal barrier 10 in the above-described changing state, and therefore image degradation may be reduced.

At time c, the zone Z1 of the display section 20 is in a state where display based on the image signal SB is being changed to display based on the image signal SA. The liquid crystal barrier 10 and the backlight 30 are in the same states as those at time b, respectively.

At time d, an upper three-quarter portion of the display section 20 (the whole zone Z1 and half the zone Z2) is in a state where display based on the image signal SB is being changed to display based on the image signal SA. In the zone Z1 of the liquid crystal barrier 10, the opening-and-closing sections 12 in each of the groups A1 and B1 continue changing. In the zone Z2, where the above-described change has started in the display section 20, is in a state where a state of opening-and-closing sections 12 in the group A2 according to the image signal SA is being changed from closing to opening, and a state of opening-and-closing sections 12 in the group B2 according to the image signal SB is being changed from opening to closing. In the backlight 30, both the light-emission sections BL1 and BL2 corresponding to the overall zones Z1 and Z2, where the above-described change occurs in each of the display section 20 and the liquid crystal barrier 10, stop light emission. This prevents a viewer from viewing each of the display section 20 and the liquid crystal barrier 10 in the above-described changing state, and therefore image degradation may be reduced.

At time e, the whole display surface of the display section 20 is in a state where display based on the image signal SB is being changed to display based on the image signal SA. The liquid crystal barrier 10 and the backlight 30 are in the same states as those at time d, respectively.

At time f, change of display has finished and display based on the image signal SA is performed in an upper quarter portion of the display section 20 (half the zone Z1), and change of display is continued in other three-quarter portion (half the zone Z1 and the whole zone Z2). The liquid crystal barrier 10 and the backlight 30 are in the same states as those at time e, respectively.

At time g, change of display has finished and display based on the image signal SA is performed in the zone Z1 of the display section 20, and change of display is continued in the zone Z2. In the zone Z1 of the liquid crystal barrier 10, change between opening and closing states has finished, and opening-and-closing sections 12 in the group A1 according to the image signal SA open. In the zone Z2 of the liquid crystal barrier 10, change between opening and closing states is continued. In the backlight 30, light emission occurs in the light-emission section BL1 corresponding to the zone Z1, where the above-described change has finished in each of the display section 20 and the liquid crystal barrier 10, emits light.

At time h, change of display has finished and display based on the image signal SA is performed in an upper three-quarter portion of the display section 20 (the whole zone Z1 and half the zone Z2), and change of display is continued in the remaining quarter portion (half the zone Z2). The liquid crystal barrier 10 and the backlight 30 are in the same states as those at time g, respectively.

At time i, in the display section 20, change of display has finished and display based on the image signal SA is performed over the whole display surface. In the liquid crystal barrier 10, change between opening and closing states has finished over the whole zones Z1 and Z2, opening-and-closing sections 12 in the groups A1 and A2 according to the image signal SA open, and opening-and-closing sections 12 in the groups B1 and B2 according to the image signal SB close. In the backlight 30, the light-emission section BL2 corresponding to the zone Z2, where the above-described change has finished in each of the display section 20 and the liquid crystal barrier 10, emits light. Consequently, both the light-emission sections BL1 and BL2 corresponding to the whole zones Z1 and Z2 emit light.

Next, in a period from time j to time r, the display section 20 is progressively scanned from the top to the bottom according to the drive signal supplied from the display drive section 50 in the same way as in the period from time a to time i, so that display based on the image signal SB is changed to display based on the image signal SA. In the liquid crystal barrier 10, a state of opening-and-closing sections 12 in the group B (groups B1 and B2) is changed from closing to opening and a state of opening-and-closing sections 12 in the group A (groups A1 and A2) is changed from opening to closing in correspondence to change in display state of the display section 20 according to the drive signal supplied from the barrier drive section 9. In the backlight 30, the light-emission sections BL1 and BL2 emit light in correspondence to a state of each of the display section 20 and the liquid crystal barrier 10 in each of the zones Z1 and Z2 according to the drive signal supplied from the backlight drive section 29.

The stereoscopic display device 1 repeats the operation from time a to time r, so that display based on the image signal SA and display based on the image signal SB are alternately repeated.

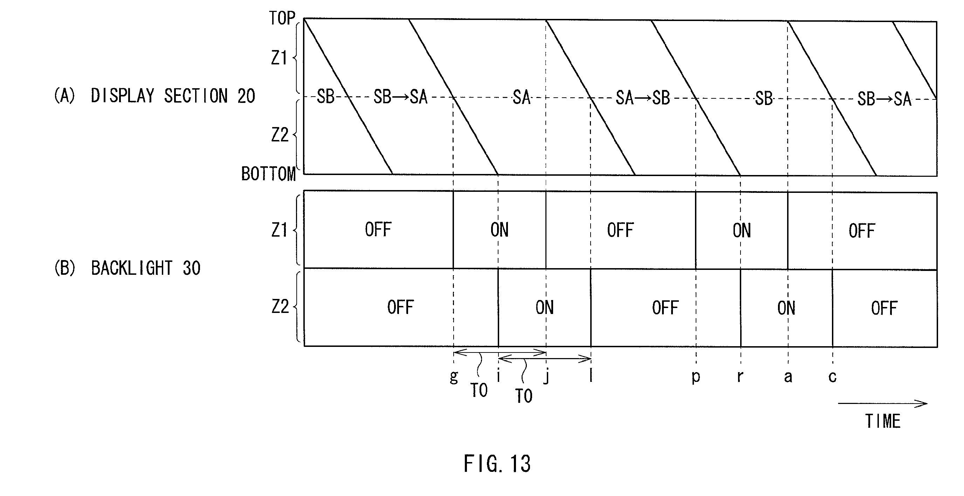

FIG. 13 illustrates a relationship between a display state of the display section 20 and a light-emission state of the backlight 30, where (A) illustrates the display state of the display section 20, and (B) illustrates the light-emission state of the backlight 30. As shown in (B) of FIG. 13, the light-emission section BL1 corresponding to the zone Z1 of the backlight 30 emits light, for example, in a period (period T0) from time g to time j, and the light-emission section BL2 corresponding to the zone Z2 emits light, for example, in a period (period T0) from time i to time 1. In this way, the backlight 30 is partitioned in a progressive scan direction of the display section 20, and the partitioned backlight sections emit light independently of each other in correspondence to the progressive scan, and therefore light-emission time may be increased and thus luminance may be increased.

### (Comparative Example)

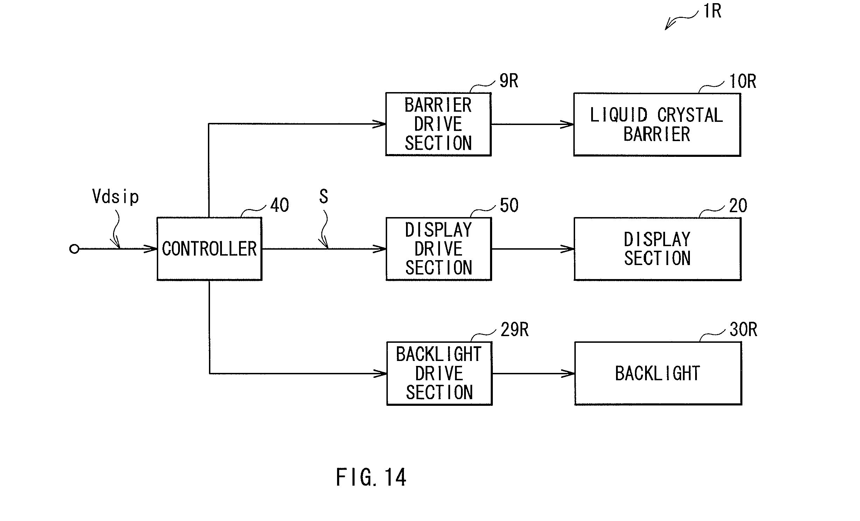

FIG. 14 illustrates a configuration example of a stereoscopic display device 1R according to a comparative example (without using the disclosure). In the comparative example, the stereoscopic display device 1R includes a backlight that is not partitioned in a progressive scan direction of a display section. Substantially the same components as those of the stereoscopic display device 1 according to the first embodiment (FIG. 1 and the like) are designated by the same symbols, and description of them is appropriately omitted.

The stereoscopic display device 1R includes a backlight 30R and a liquid crystal barrier 10R. The backlight 30R has a light-emission section that is not partitioned in a progressive scan direction (y-axis direction) of a display section unlike the backlight 30 (FIGs. 6A and 6B) according to the embodiment, and emits light from the whole surface of the backlight 30R at a time, or stops light emission over the whole surface at a time. The backlight 30R is driven by a backlight drive section 29R. The liquid crystal barrier 10R has opening-and-closing sections 12 that are not partitioned in the progressive scan direction (y-axis direction) of the display section in the same way as the backlight 30R. The liquid crystal barrier 10R is driven by a barrier drive section 9R.

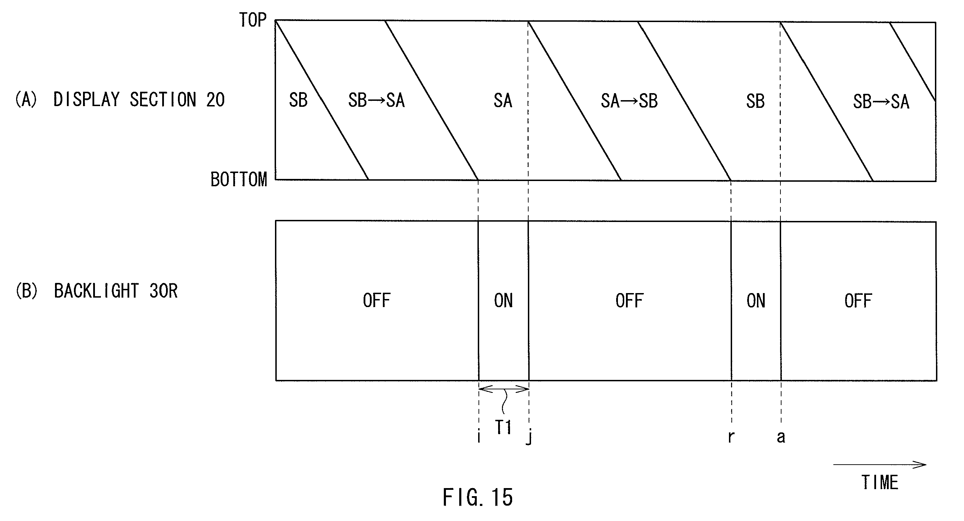

FIG. 15 illustrates a relationship between a display state of the display section 20 and a light-emission state of the backlight 30R according to the comparative example, where (A) illustrates the display state of the display section 20, and (B) illustrates the light-emission state of the backlight 30R. As shown in (B) of FIG. 15, the backlight 30R emits light, for example, only in a period from time i to time j in order to suppress image degradation due to transient response of liquid crystal. Specifically, in this example, the backlight emits light in a period from a point (time i) where display based on an image signal SB has been changed to display based on an image signal SA at a bottom of the display section 20 to a point (time j) where display based on the image signal SA begins to be changed to display based on the image signal SB at a top of the display section 20. In this example, such light-emission time (time T1) is short, approximately half the light-emission time (time T0) of the stereoscopic display device 1 (FIG. 13) according to the embodiment. In this case, the stereoscopic display device is reduced in luminance.

In contrast, in the stereoscopic display device 1 according to the embodiment, the backlight 30 is partitioned in the progressive scan direction of the display section 20, and such partitioned backlight sections may emit light independently of each other. Consequently, light-emission timing may be set separately for each of the partitioned sections of the backlight 30 (light-emission sections BL1 and BL2), making it possible to increase luminance by increasing light-emission time of each of the light-emission sections BL1 and BL2.

### [Effects]

As hereinbefore, in the embodiment, each of the backlight 30 and the liquid crystal barrier 10 is partitioned in the progressive scan direction of the display section 20, and such partitioned regions are driven independently of each other, making it possible to increase luminance while suppressing image degradation due to transient response of liquid crystal.

### [Modification 1]

While each of the backlight 30 and the opening-and-closing sections 12 of the liquid crystal barrier 10 is partitioned in two in the progressive scan direction of the display section 20 in the embodiment, this is not limitative. For example, each component may be partitioned in three or more. The following is an example of a case where each component is partitioned in four.

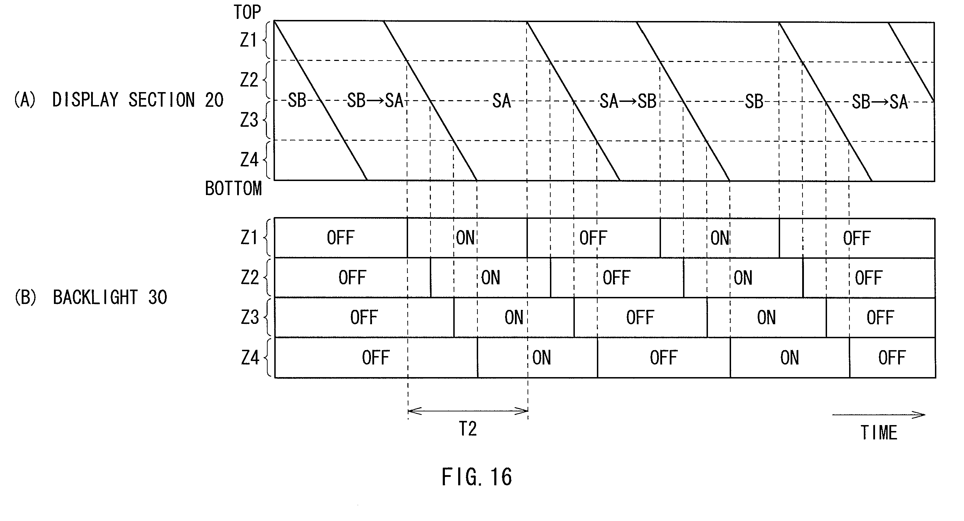

FIG. 16 illustrates a relationship between a display state of a display section and a light-emission state of a backlight according to the modification, where (A) illustrates the display state of the display section, and (B) illustrates the light-emission state of the backlight. In the modification, each of the backlight and opening-and-closing sections of a liquid crystal barrier is partitioned into four zones Z1 to Z4 in a progressive scan direction of the display section. Consequently, light-emission time (time T2) of the backlight is relatively long in this example, approximately 1.3 times as long as the light-emission time (time T0) in the embodiment (FIG. 13), as shown in (B) of FIG. 16. In this way, increase in division number makes it possible to increase light-emission time, leading to increase in luminance.

### [Modification 2]

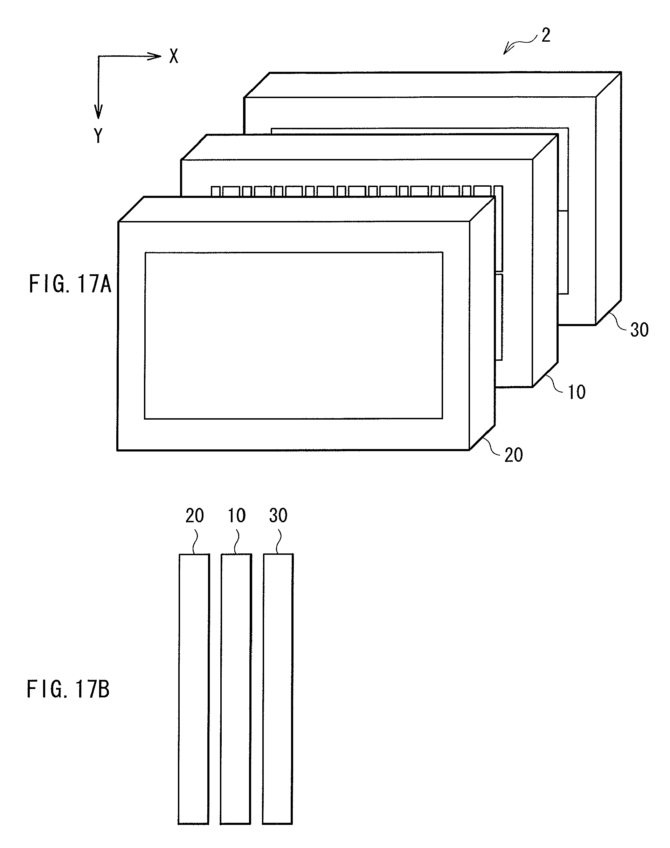

While the backlight 30, the display section 20, and the liquid crystal barrier 10 of the stereoscopic display device 1 are disposed in this order in the embodiment, this is not limitative. For example, the backlight 30, the liquid crystal barrier 10, and the display section 20 may be disposed in this order instead as shown in FIG. 17.

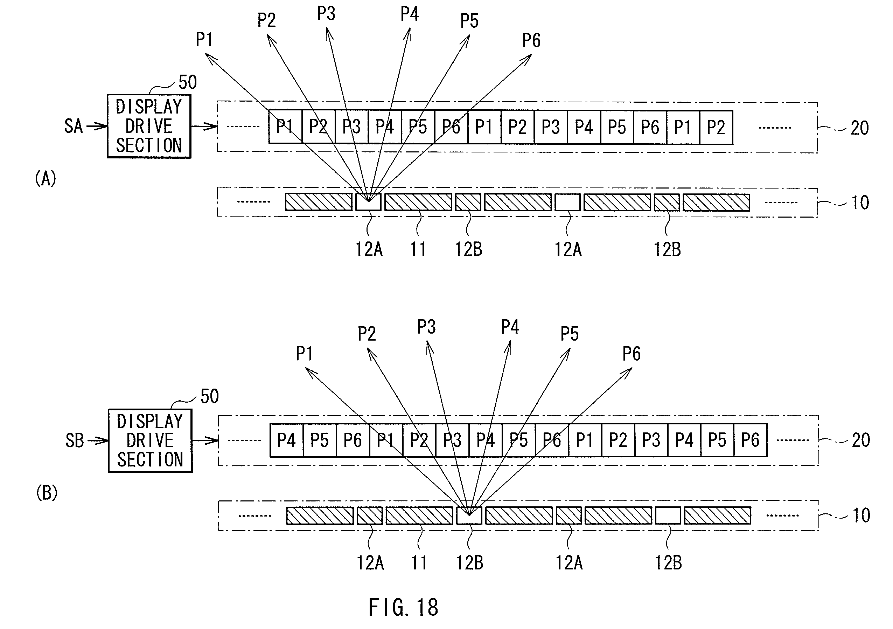

FIG. 18 illustrates an operation example of each of the display section 20 and the liquid crystal barrier 10 according to the modification, where (A) illustrates a case where an image signal SA is supplied, and (B) illustrates a case where an image signal SB is supplied. In the modification, light outputted from the backlight 30 first enters the liquid crystal barrier 10. Then, the light is partially transmitted through each of opening-and-closing sections 12A or 12B and then modulated in the display section 20 so that six eyepoint images are outputted.

### [Modification 3]

While the backlight partitioned only in the progressive scan direction (y-axis direction) of the display section 20 is used in the embodiment, this is not limitative, and a backlight partitioned in an x-axis direction as well as in the y-axis direction may be used.

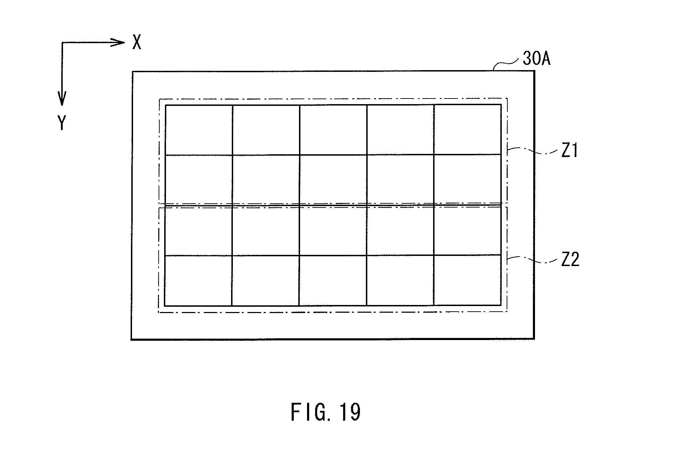

FIG. 19 illustrates a configuration example of a backlight partitioned in both x and y-axis directions. In this example, the backlight is partitioned in five in the x-axis direction and partitioned in four in the y-axis direction. Such a backlight has been often used in the past in order to reduce power consumption by partially decreasing luminance or stopping light emission of a backlight in correspondence to a dark portion of an image, for example, when the dark portion covers half a screen. Even if such a backlight is used, the same advantage as in the embodiment may be obtained. In other words, as shown in FIG 19, zones Z1 and Z2 are defined in the backlight and controlled independently of each other in the same way as in the backlight 30 according to the embodiment (FIGs. 6A and 6B), thereby the same advantage as in the embodiment may be obtained.

While data are line-sequentially written to the display section 20 in the embodiment, for example, when data are point-sequentially written to the section instead, the zones are controlled independently of one another in the y-axis direction as well as in the x-axis direction of the display section 20. This makes it possible to increase luminance while suppressing image degradation due to transient response of liquid crystal, as in the embodiment.

### [Modification 4]

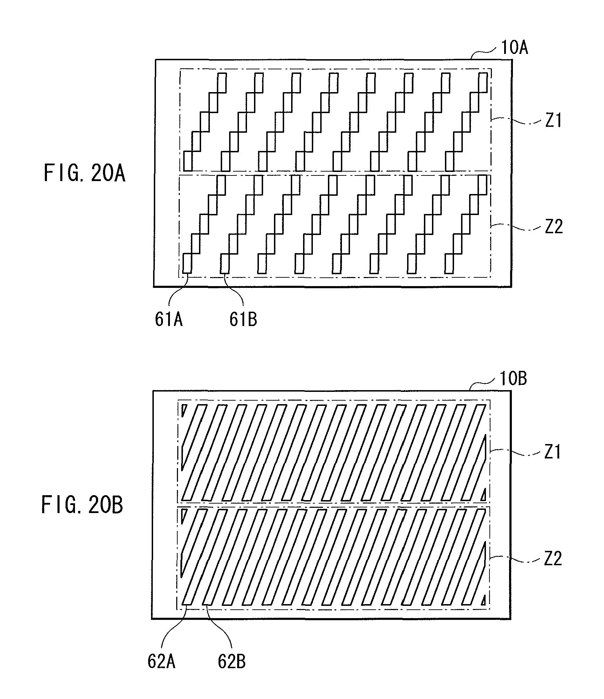

While the opening-and-closing sections of the liquid crystal barrier extend in the y-axis direction in the embodiment, this is not limitative. For example, a stepped-barrier form shown in FIG. 20A or an oblique-barrier form shown in FIG. 20B may be used instead. The stepped-barrier form is described, for example, in Japanese Unexamined Patent Application Publication No. 2004-264762. The oblique-barrier form is described, for example, in Japanese Unexamined Patent Application Publication No. 2005-86506.

### [Modification 5]

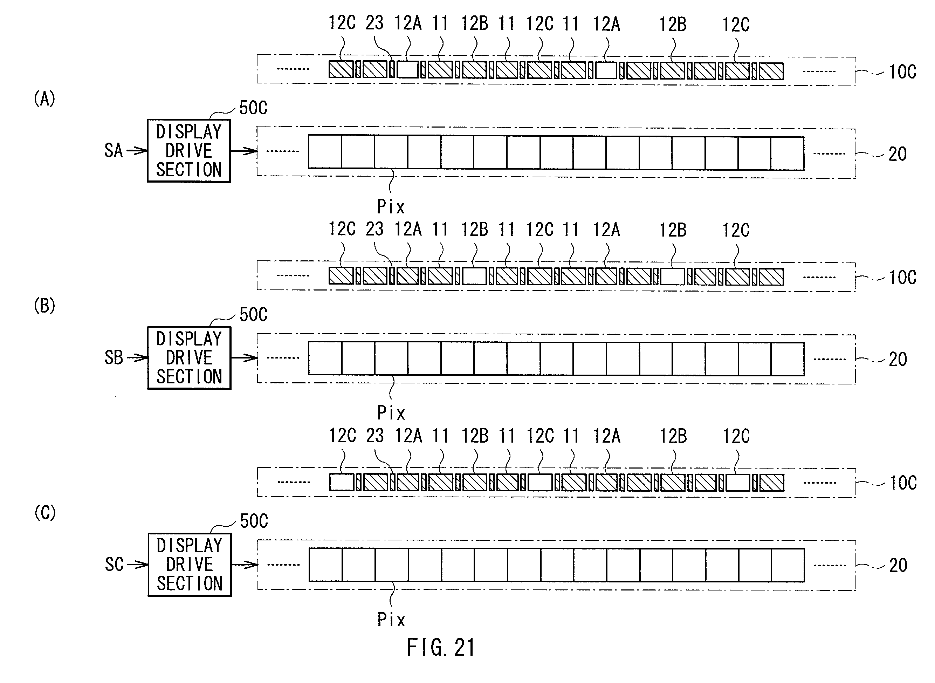

While the opening-and-closing sections 12 configure two groups in each of the zones Z1 and Z2 in the embodiment, this is not limitative. For example, the section 12 may configure three or more groups instead. This allows further improvement in resolution of display. FIG. 21 illustrates an example of a case where opening-and-closing sections 12 configure three groups A, B, and C. As in the embodiment, opening-and-closing sections 12A show opening-and-closing sections 12 in the group A, opening-and-closing sections 12B show opening-and-closing sections 12 in the group B, and opening-and-closing sections 12C show opening-and-closing sections 12 in the group C. Images are displayed while the opening-and-closing sections 12A, 12B, and 12C are allowed to open alternately in a time-divisional manner, thereby a stereoscopic display device according to the modification enables resolution three times as high as resolution in a case where only the opening-and-closing sections 12A are provided. In other words, resolution of this stereoscopic display device is 1/2 (=1/6*3) of resolution in the case of two-dimensional display.

### [Modification 6]

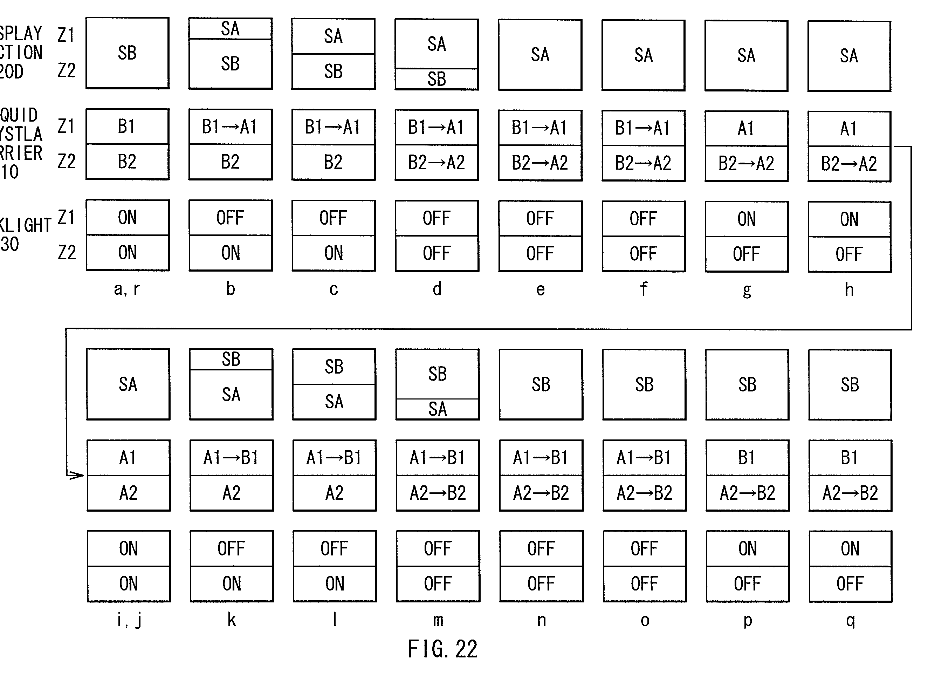

For example, while liquid crystal is used for the display section 20 in the embodiment, this is not limitative. FIG. 22 illustrates display operation in a case where a display section 20D having high response time is used. In a period from time a to time e, the display section 20D is progressively scanned from a top to a bottom thereof based on a drive signal supplied from a display drive section, so that display based on an image signal SB is changed to display based on an image signal SA in a short response time. Similarly, in a period from time j to time n, the display section 20D is progressively scanned from a top to a bottom thereof based on a drive signal supplied from the display drive section, so that display based on an image signal SA is changed to display based on an image signal SB in a short response time. In this case, each of light-emission sections BL1 and BL2 of a backlight 30 does not emit light in each of states ("B1→A1", "A1-B1", "B2→A2", and "A2→B2") where opening-and-closing sections 12 of a liquid crystal barrier 10 are being changed, and emits light in other states.

### [Modification 7]

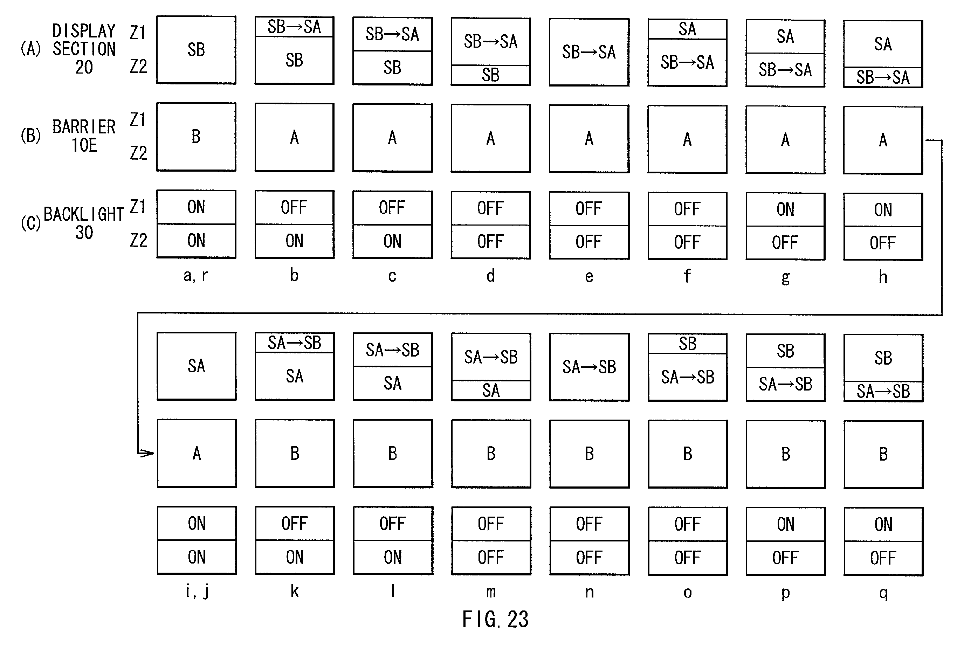

For example, while the liquid crystal barrier 10 configured of liquid crystal is used in the embodiment, this is not limitative. FIG. 23 illustrates display operation in a case where a barrier 10E with opening-and-closing sections having high response time is used. The barrier 10E is not partitioned in a progressive scan direction. At time b, in the barrier 10E, a state of opening-and-closing sections 12 in a group A according to an image signal SA is changed from closing to opening in a short response time, and a state of opening-and-closing sections 12 in a group B according to an image signal SB is changed from opening to closing in a short response time. At time k, in the barrier 10E, a state of the opening-and-closing sections 12 in the group B according to the image signal SB is changed from closing to opening in a short response time, and a state of the opening-and-closing sections 12 in the group A according to the image signal SA is changed from opening to closing in a short response time. In this case, each of light-emission sections BL1 and BL2 of a backlight 30 does not emit light in each of states ("SB→SA" and "SA→SB") where display of a display section 20 is being changed, and emits light in other states.

### [Modification 8]

For example, in the embodiment, when display on the display section 20 or an opening-and-closing state of the liquid crystal barrier 10 is being changed (transient response), the backlight 30 does not emit light as shown in FIGs. 12 and 13. However, this is not limitative, and such a no-light-emission period may be decreased or increased within a span short enough for a viewer not to feel image degradation as viewing an image. This is described with several examples below.

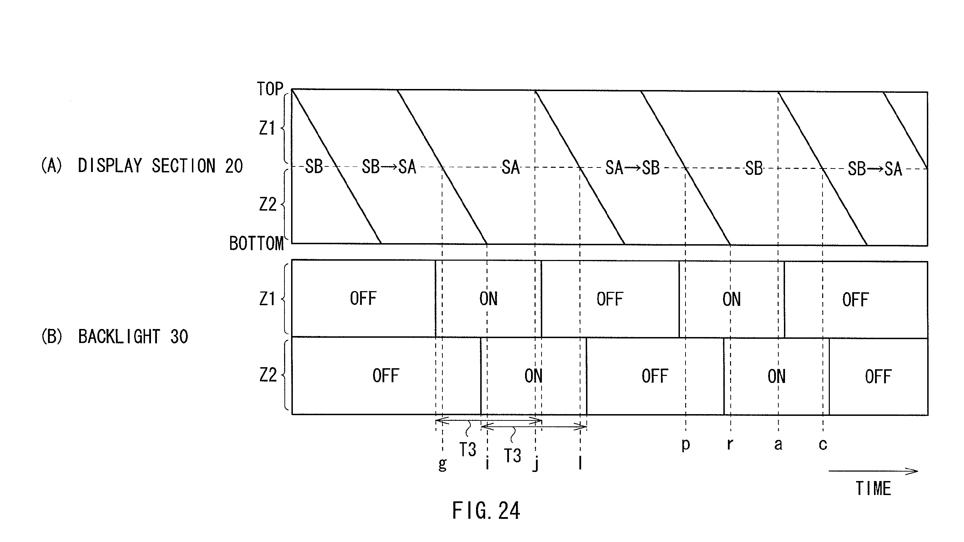

FIG. 24 illustrates an operation example in a case where the no-light-emission period is decreased. In the example, before change of display finishes near a bottom of each of zones Z1 and Z2 of the display section 20, each of corresponding light-emission sections BL1 and BL2 of the backlight 30 starts light emission, and after change of display starts near a top of each of the zones Z1 and Z2 of the display section 20, each of corresponding light-emission sections BL1 and BL2 of the backlight 30 stops light emission. This makes it possible to increase light-emission time (time T3) of the backlight 30, leading to increase in luminance of a stereoscopic display device.

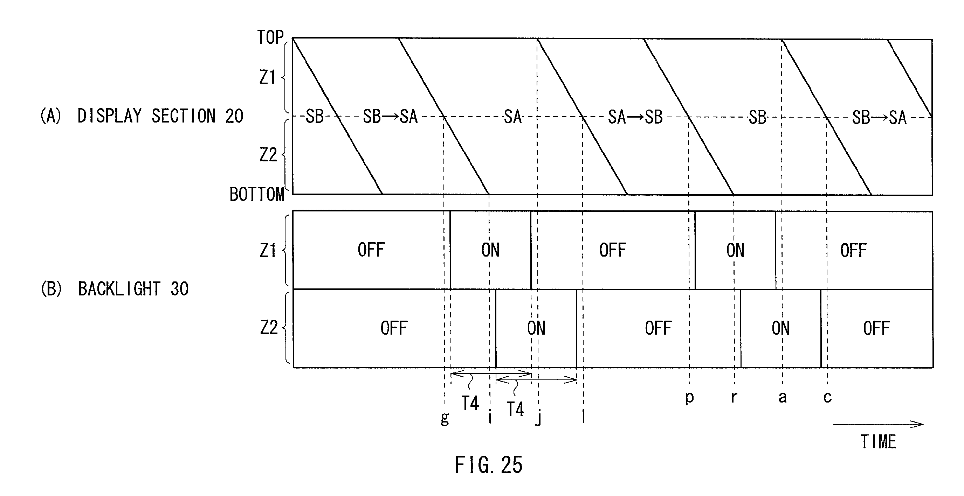

FIG 25 illustrates an operation example in a case where the no-light-emission period is increased.
In the example, after change of display has finished near a bottom of each of zones Z1 and Z2 of the display section 20, each of corresponding light-emission sections BL1 and BL2 of the backlight 30 starts light emission, and before change of display starts near a top of each of the zones Z1 and Z2 of the display section 20, each of corresponding light-emission sections BL1 and BL2 of the backlight 30 stops light emission. Consequently, for example, even if transient response of liquid crystal varies depending on temperature, a possibility that a viewer views an image displayed in such a transient response period may be reduced, making it possible to minimize image degradation due to transient response of liquid crystal.

Timing of starting or stopping light emission of the backlight 30 is not limited to the above. For example, before change of display finishes near the bottom of each of the zones Z1 and Z2, each of corresponding light-emission sections BL1 and BL2 may start light emission, and before change of display starts near the top of each of the zones Z1 and Z2, each of corresponding light-emission sections BL1 and BL2 may stop light emission. Alternatively, after change of display has finished near the bottom of each of the zones Z1 and Z2, each of corresponding light-emission sections BL1 and BL2 may start light emission, and after change of display starts near the top of each of the zones Z1 and Z2, each of corresponding light-emission sections BL1 and BL2 may stop light emission. In addition, immediately before or after change of display finishes near the bottom of each of the zones Z1 and Z2, each of corresponding light-emission sections BL1 and BL2 may start light emission, and just when change of display starts near the top of each of the zones Z1 and Z2, each of corresponding light-emission sections BL1 and BL2 may stop light emission. Alternatively, just when change of display finishes near the bottom of each of the zones Z1 and Z2, each of corresponding light-emission sections BL1 and BL2 may start light emission, and immediately before or after change of display starts near the top of each of the zones Z1 and Z2, each of corresponding light-emission sections BL1 and BL2 may stop light emission.

### [Modification 9]

For example, while the backlight 30 and the liquid crystal barrier 10 have the same division number in the progressive scan direction in the embodiment, this is not limitative, and the components may have different division numbers. Even in this case, each of light-emission sections configuring the backlight 30 is allowed to operate in correspondence to an opening-and-closing state of opening-and-closing sections 12 in each corresponding region of the liquid crystal barrier 10, thereby the same advantage as in the embodiment may be achieved. The following is an example of a case where the division number of the backlight 30 is made larger than that of the liquid crystal barrier 10.

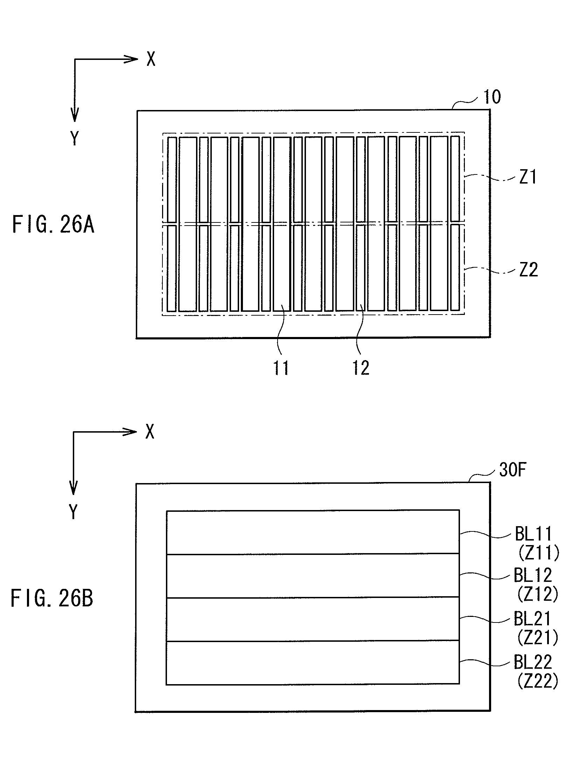

FIG. 26A illustrates a liquid crystal barrier 10 according to the modification, and FIG. 26B illustrates a backlight 30F according to the modification. In this example, opening-and-closing sections 12 of the liquid crystal barrier 10 are partitioned in two in a progressive scan direction (y-axis direction) and therefore configured of two zones Z1 and Z2. On the other hand, the backlight 30F is configured of four zones Z11, Z12, Z21, and Z22 (four light-emission sections BL11, BL12, BL21, and BL22). The zone Z1 of the liquid crystal barrier 10 corresponds to the zones Z11 and Z12 of the backlight 30F, and the zone Z2 of the barrier 10 corresponds to the zones Z21 and Z22 of the backlight 30F. In other words, the liquid crystal barrier 10 and the backlight 30F are disposed such that light outputted from the light-emission sections BL11 and BL12 enters the zone Z1 of the liquid crystal barrier 10 through the display section 20, and light outputted from the light-emission sections BL21 and BL22 enters the zone Z2 of the barrier 10 through the display section 20. For example, in a backlight using LED, a plurality of LEDs is typically used to achieve uniform light emission. By using this, the division number of the backlight may be easily increased. In this way, the division number of the backlight 30 is desirably made larger than that of the liquid crystal barrier 10 as shown in FIGs. 26A and 26B.

While the disclosure has been described with the embodiment and the modifications hereinbefore, the disclosure is not limited to the embodiment and the like, and various modifications or alterations may be made.

For example, while the image signal SA or SB includes six eyepoint images in the embodiment, this is not limitative, and the signal may include not more than five or not less than seven eyepoint images. In such a case, the relationship between the opening-and-closing sections 12A or 12B of the liquid crystal barrier 10 and the pixels Pix as shown in FIG. 9 is correspondingly changed. In other words, for example, when the image signal SA or SB includes five eyepoint images, the opening-and-closing sections 12A are desirably provided by one for five pixels Pix of the display section 20, and the opening-and-closing sections 12B are similarly desirably provided by one for five pixels Pix of the display section 20.

For example, while light is not transmitted between the light-emission sections BL1 and BL2 of the backlight 30 in the embodiment, this is not limitative. For example, light may be transmitted between the sections as long as significant image degradation does not occur. As described in the embodiment, light emitted by each light-emission section of the backlight is desirably prevented from leaking to another light-emission section, and if light leakage occurs, image degradation may occur. Specifically, in FIGs. 6A and 6B, for example, leakage light from the light-emission section BL2 enters the light-emission section BL1, resulting in long emission time of the light-emission section BL1 compared with driving time of the section BL1 for light emission. However, even in such a case, when the quantity of leakage light from the light-emission section BL2 is sufficiently small compared with the quantity of light outputted from the light-emission section BL1, significant image degradation may be prevented, enabling stereoscopic display.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention. The present disclosure contains subject matter related to that disclosed in Japanese Priority Patent Application JP 2010-150912 filed in the Japan Patent Office on July 1, 2010, the entire content of which is hereby incorporated by reference.

It should be understood by those skilled in the art that various modifications, combinations, sub-combinations and alterations may occur depending on design requirements and other factors insofar as they are within the scope of the appended claims or the equivalents thereof.

## Claims

1. A display device comprising:
a display section time-divisionally displaying a plurality of images with different parallaxes in a manner of progressive (or line-sequential) scan;
a backlight section including a plurality of light-emission subsections partitioned in a direction of the progressive scan;
a light-barrier section including a plurality of barrier groups each including a plurality of barriers each allowed to be switched between open state and closed state;
a light-barrier drive section individually driving the plurality of barrier groups to open or close at different timings between the barrier groups; and
a backlight controller controlling light emission from each of the light-emission subsections of the backlight section in synchronization with the progressive scan of the display section.

2. The display device according to claim 1,
wherein the light-barrier section is partitioned into a plurality of barrier subsections corresponding to the plurality of light-emission subsections, respectively, and each of the barrier subsections is grouped into the plurality of barrier groups,
the light-barrier drive section individually drives the plurality of barrier groups in each of the barrier subsections to open or close at different timings between the barrier groups, and
the backlight controller controls light emission of each of the light-emission subsections of the backlight in synchronization with an opening-and-closing operation of each of the barrier groups in each of the barrier subsections as well as with the progressive scan of the display section.

3. The display device according to claim 2, wherein the light-emission subsections of the backlight is equal, in number, to the barrier subsections of the light-barrier section.

4. The display device according to claim 2, wherein the light-emission subsections of the backlight is larger, in number, than the barrier subsections of the light-barrier section.

5. The display device according to claim 2, wherein the barriers belonging to each of the barrier groups in each of the barrier subsections are cyclically disposed at intervals of the predetermined number thereof.

6. The display device according to claim 2,
wherein the light-barrier drive section drives the barriers to be switched between open state and closed state in a manner of time-divisional switching between the barrier groups, and
the display section performs image display on a region corresponding to the barrier which has come into open state.

7. The display device according to claim 2, wherein one or both of the display section and the light-barrier section is configured of liquid crystal.

8. The display device according to claim 7, wherein the light-barrier section is configured of liquid crystal, and
at a first timing when light transmittance of a barrier in a barrier subsection is maximized, or immediately before or after the first timing, the backlight controller controls the corresponding light-emission subsection to emit light, and
at a second timing when the light transmittance starts to decrease from a maximum value, or immediately before or after the second timing, the backlight controller controls the corresponding light-emission subsection to stop light emission.

9. The display device according to claim 7, wherein the display section is configured of liquid crystal, and
at a first timing when display on a region of the display section has completely changed, or immediately before or after the first timing, the backlight controller controls the corresponding light-emission subsection to emit light, and
at a second timing when display on the region of the display section has started to change, or immediately before or after the second timing, the backlight controller controls the corresponding light-emission subsection to stop light emission.

10. The display device according to claim 2, wherein the light-barrier section is disposed between the backlight and the display section.

11. The display device according to claim 2, wherein the display section is disposed between the backlight and the light-barrier section.

12. A display device comprising:
a display section driven with progressive scan;
a backlight section including a plurality of light-emission subsections partitioned in a direction of the progressive scan; and
a light-barrier section including a plurality of barrier subsections partitioned in a direction of the progressive scan,
wherein the plurality of light-emission subsections emit light at different timings therebetween in synchronization with the progressive scan of the display section, and
the plurality of barrier subsections are driven at different timings therebetween.

13. A display device comprising:
a display section time-divisionally displaying a plurality of images with different parallaxes in a manner of progressive (or line-sequential) scan;
a backlight section including a plurality of light-emission subsections partitioned in a direction of the progressive scan, each of the light-emission subsections emitting light in synchronization with the progressive scan of the display section; and
a light-barrier section including a plurality of barrier groups each including a plurality of barriers, the light-barrier section being allowed to individually drive the plurality of barrier groups to open or close at different timings between the barrier groups.

14. A display drive circuit comprising:
a backlight controller controlling light emission from each of light-emission subsections included in a backlight section in synchronization with progressive scan for time-divisionally driving a display section displaying a plurality of images with different parallaxes, the light-emission subsections being formed by partitioning the backlight in a direction of the progressive scan; and
a light-barrier drive section individually driving a plurality of barrier groups of a light-barrier section, the barrier groups each including a plurality of barrier sections, to open or close at different timings between the barrier groups.
